# EUROPÄISCHE PATENTSCHRIFT

(11) **EP 1 277 330 B1**
(45) Veröffentlichungstag und Bekanntmachung des Hinweises auf die Patenterteilung: **20.09.2006**
(21) Anmeldenummer: 01929505.4
(22) Anmeldetag: 05.04.2001
(51) Int. Cl.: H04M 3/32

(54) **VERFAHREN UND VORRICHTUNG ZUR MESSUNG DER QUALITÄT EINES ZUR ÜBERTRAGUNG VON DIGITALEN ODER ANALOGEN SIGNALEN AUSGELEGTEN LEITUNGSNETZES**
METHOD AND DEVICE FOR MEASURING THE QUALITY OF A NETWORK FOR THE TRANSMISSION OF DIGITAL OR ANALOG SIGNALS
PROCEDE ET DISPOSITIF DE MESURE DE LA QUALITE D'UN RESEAU DE DISTRIBUTION CONCU POUR TRANSMETTRE DES SIGNAUX NUMERIQUES OU ANALOGIQUES

(30) Priorität: 20.04.2000 DE 10019552
(43) Veröffentlichungstag der Anmeldung: 22.01.2003
(73) Patentinhaber: Deutsche Telekom AG, 53113 Bonn (DE)
(72) Erfinder: KOLLIGS, Detlef, 64807 Dieburg (DE); WEINGARTZ, Klaus, 64342 Seeheim (DE)
(86) Internationale Anmeldenummer: PCT/EP2001/003865
(87) Internationale Veröffentlichungsnummer: WO 2001/082574

(56) Entgegenhaltungen:
- EP-A- 0 565 224
- EP-A- 0 741 471
- US-A- 5 875 230
- RAMSDEN D B: "IN-SERVICE, NONINTRUSIVE MEASUREMENT ON SPEECH SIGNALS" PROCEEDINGS OF THE GLOBAL TELECOMMUNICATIONS CONFERENCE. (GLOBECOM),US,NEW YORK, IEEE, Bd. -, 2. Dezember 1991 (1991-12-02), Seiten 1761-1764, XP000313702 ISBN: 0-87942-697-7

## Beschreibung

Die Erfindung betrifft ein Verfahren gemäß der im Oberbegriff des Anspruches 1 angegebenen Art sowie eine Vorrichtung gemäß der im Anspruch 16 angegebenen Art.

Verfahren und Vorrichtungen zur Messung der Qualität eines zur Übertragung von.digitalen oder analogen Signalen ausgelegten Leitungsnetzes einschließlich der Anschlüsse, über die Telekommunikationsendgeräte mit dem Leitungsnetz verbunden sind, wie Telefone, Telefaxgeräte, Modems, Mobiltelefone oder ähnliches, sind grundsätzlich bekannt.

So gibt es z. B. das INMD-Messverfahren (In service non-intrusive measurement device monitoring of live traffic), das nach dem ITU-T-Standard P.561 und dessen Weiterentwicklungen arbeitet. Mit Hilfe dieses Messverfahrens können die Qualität der Übertragung beschreibende Parameter während des Betriebs, beispielsweise während eines Telefongespräches, abgefragt werden. Mögliche Parameter des Messverfahrens können der Sprachpegel, der Geräuschpegel, die Echolaufzeit, die Echodämpfung und ähnliches im Nutzkanal sein.

Darüberhinaus ist es möglich, auch die Informationen des Signalisierungskanals, wie den D-Kanal oder den Zentralen Zeichengabekanal Nr. 7 (ZGS Nr. 7), zu erfassen.

Der Vorteil dieses Messverfahrens liegt darin, dass Informationen über die Änderung einzelner Parameter über eine vorbestimmte Zeit im Leitungsnetz ohne Eingriff in dieses, d. h. ohne Abschaltung von Teilen des Leitungsnetzes, möglich sind. Auf diese Weise kann das INMD-Verfahren potentielle Anomalien, z. B. periodisch auftretendes Geräusch, Echoprobleme an Leitungsabschlusseinheiten, usw. aus der Umgebung von Endgeräten und zwischen den Schnittstellen von Netzelementen entdecken.

Die ermittelten Werte für die einzelnen Messparameter haben aber nur eine Aussagekraft hinsichtlich ihrer zeitlichen Änderung. Beispielsweise ändert sich der Sprachpegel während der Dauer eines Telefongespräches oder der Geräuschpegel war zu einem bestimmten Zeitpunkt bei einer anderen Messung ein anderer als bei dieser Messung. Hieraus können dann Schlussfolgerungen gezogen und Maßnahmen ergriffen werden, die die Ursachen der Veränderung des Messparameters und somit die Einschränkung der Qualität der Übertragung beheben.

Nachteilig bei diesem bekannten Messverfahren ist jedoch, dass eine gezielte Fehlereingrenzung auf die tatsächliche Ursache der Beeinträchtigung der Qualität der Übertragung im Leitungsnetz und eine genaue Lokalisierung der Fehler nicht möglich ist. Zudem werden Parameter gemessen, die auch durch das Telekommunikationsendgerät beeinflusst werden. Die Aussagekraft über die mögliche Qualität im Leitungsnetz ist daher unzureichend.

Des Weiteren gibt es grundsätzlich ein Messverfahren, das als "out of service, intrusive network"-Messverfahren bekannt ist, das nach dem ITU-T-Standard P.861 arbeitet. Hierbei müssen zur Feststellung von übertragungstechnischen Charakteristika an definierten Punkten des Leitungsnetzes sowohl Telekommunikationsendeinrichtungen als auch Elemente des Leitungsnetzes von diesem getrennt werden. An den Trennstellen, wie Anschlüssen oder Verteilern, wird dann eine RTU (remote-test-unit) angeschlossen. Diese dient auf der einen Seite als Sender und auf der anderen Seite als Empfänger. Es handelt sich hierbei um ein Testgerät, das die Funktionen von Endgeräten nachbildet, also die Übermittlung von Sprachinformationen, Daten, Bildinformationen und ähnliches. Mit vorgegebenen Parametern können vom Sender zum Empfänger, der die Messstelle bildet, verschiedenartige physikalische Qualitätsbetrachtungen - out of service - im Netz durchgeführt werden. Denkbar ist ebenso, die RTU-Funktionen als fernschaltbare Baugruppe oder Chip in ein Endgerät (z. B. Einsatz in Multimedia-Internet-PC) zu integrieren.

Nachteilig an diesem Messverfahren ist jedoch, dass die tatsächliche Situation beim Übertragen von analogen oder digitalen Signalen, beispielsweise während der Telekommunikation (Live-Traffic) zwischen einem Kunden A und einem Kunden B, nicht überwacht werden kann. Somit können weder Einflüsse der Telekommunikationsendeinrichtungen auf das Leitungsnetz noch Rückwirkungen von dem Leitungsnetz auf die Telekommunikationsendeinrichtungen unmittelbar erfasst werden. Des Weiteren ist der Aufwand, insbesondere der Personalaufwand, für dieses Messverfahren sehr hoch.

Bekannt ist des Weiteren ein Netzwerkplanungsmodell, das sogenannte E-Modell nach dem ITU-Standard G.107, mit dessen Hilfe die Übertragungsqualität berechnet werden kann.

US-A-5 875 230 beschreibt allgemein die Anwendung des INMD-Messverfahrens.

Der Erfindung liegt die Aufgabe zugrunde, ein Verfahren gemäß der im Oberbegriff des Anspruches 1 angegebenen Art sowie eine Vorrichtung zur Durchführung dieses Verfahrens derart weiterzubilden, dass die Qualität der Übertragung bei einer Verbindung über einen Teil des Leitungsnetzes und somit die Leistungsfähigkeit dieses Teils des Leitungsnetzes unter Einbeziehung der Einflüsse der beim Kunden angeschalteten Telekommunikationsendeinrichtungen für die Übertragung von unterschiedlichen Diensten, wie Sprache, Fax, Daten und/oder ähnliches, besser erfasst und bewertet werden kann.

Diese Aufgabe wird für das Verfahren durch die kennzeichnenden Merkmale des Anspruches 1 in Verbindung mit seinen Oberbegriffsmerkmalen und für die Vorrichtung durch die Merkmale des Anspruches 16 gelöst.

Weitere Lösungen bzw. Ausgestaltungen der Erfindung sind in den Patentansprüchen 2 bis 15 charakterisiert.

Der Erfindung liegt die Erkenntnis zugrunde, dass durch Ermitteln von Referenzwerten für die Parameter des INMD-Messverfahrens und Vergleichen der mit dem INMD-Messverfahren ermittelten Werte mit den Referenzwerten sich sofort eindeutige Aussagen über die Qualität der Telekommunikationsverbindung machen lassen.

Nach der Erfindung werden daher zunächst Referenzwerte der Parameter des INMD-Messverfahrens für eine Verbindung über zumindest einen Teil des Leitungsnetzes ermittelt. Diese Referenzwerte werden diesem Teil des Leitungsnetzes zugeordnet und in einem Speicher abgelegt. Nachfolgend wird dieser Teil des Leitungsnetzes mit Hilfe des INMD-Messverfahrens überwacht, wobei die hierbei ermittelten Werte der jeweiligen Parameter mit den abgespeicherten zugeordneten Referenzwerten verglichen werden, sodass Übereinstimmungen mit und Abweichungen von den Referenzwerten - Vergleichswerte - erkennbar sowie im Hinblick auf die Qualität der Übertragung bewertbar sind.

Auf einfache Weise sind nunmehr die mit dem INMD-Messverfahren ermittelten Werte der jeweiligen Parameter im Hinblick auf die Qualität der Verbindung von Kunde A zu Kunde B sofort bewertbar. Zudem ergeben sich hierdurch weitreichende Möglichkeiten eines Qualitätsmanagements. Beispielsweise können Teile des Leitungsnetzes, die nach dem Messverfahren nach der Erfindung überwacht werden, ohne weiteres mit Mindestqualitätsstandards vermietet werden. Beeinträchtigungen der Qualität können nämlich umgehend behoben werden, ohne dass der Kunde sich hierfür beim Netzbetreiber beschweren muss. Dies steigert die Zufriedenheit der Kunden erheblich.

Des Weiteren können mit dem Messverfahren nach der Erfindung bedeutend mehr Teile eines Leitungsnetzes überwacht werden, als das beispielsweise mit dem personalintensiven "out of service, intrusive network"-Messverfahren möglich wäre.

Die Referenzwerte können beispielsweise über ein "out of service, intrusive network"-Messverfahren ermittelt oder auch berechnet werden, insbesondere unter Zuhilfenahme eines Netzwerkplanungsmodells, wie das E-Modell nach dem ITU-Standard G.107. Bei der Ermittlung mit dem "out of service, intrusive network"-Messverfahren werden die entsprechenden Parameter des INMD-Messverfahrens gemessen.

Zur Dokumentation der Qualität des überwachten Teils des Leitungsnetzes werden die mit dem INMD-Messverfahren ermittelten Werte und/oder die zugeordneten Vergleichswerte auf diesen Teil des Leitungsnetzes bezogen im Speicher abgelegt. Hierdurch kann auch eine zeitabhängige Betrachtung der einzelnen Parameter im Hinblick auf die ermittelten Werte und/oder die Vergleichswerte auf einfache Weise erfolgen. Die Referenzwerte, die ermittelten Werte und/oder die Vergleichswerte werden daher insbesondere einer Messzeit zugeordnet.

Gemäß einer Ausführungsform der Erfindung werden für die einzelnen Parameter des INMD-Messverfahrens Schwellwerte festgelegt, und diese Schwellwerte mit den zugeordneten ermittelten Werten während des INMD-MessVerfahren laufend verglichen. Bei Überschreiten eines Schwellwerts ergeht ein Signal. Hierdurch kann die Überwachung erheblich vereinfacht werden, da letzten Endes nur bei Überschreiten eines vorbestimmten Schwellwerts ein Parameter sich so verändert hat, dass Maßnahmen erforderlich sind, die die Beeinträchtigung der Übertragungsqualität beheben. Je nachdem welche Übertragungsqualität dem Kunden garantiert wurde, umfassen die Schwellwerte eine größere oder kleinere Bandbreite.

Insbesondere betätigt das Signal eine optische und/oder akustische Anzeige, wodurch eine verantwortliche Person darauf aufmerksam gemacht wird, dass nunmehr die erforderlichen Maßnahmen zur Behebung der Beeinträchtigung der Qualität der Übertragung eingeleitet werden müssen.

Um vor allem bei Beeinträchtigung der Qualität der Übertragung die mögliche Ursache gezielt festzustellen und zu lokalisieren, wird nach Überschreiten zumindest eines Schwellwerts eines Parameters durch zumindest einen einzigen ermittelten zugeordneten Wert das "out of service, intrusive network"-Messverfahren wieder eingeleitet. Hierdurch wird gewährleistet, dass das personal- und kostenintensive "out of service, intrusive network"-Messverfahren nur durchgeführt wird, wenn es tatsächlich zu einer Beeinträchtigung der Qualität der Übertragung gekommen ist.

Bei dem "out of service, intrusive network"-Messverfahren werden dann Messungen zur Lokalisierung von Störungsquellen, wie PSQM nach dem ITU-Standard, durchgeführt.

Damit auch Qualitätsaussagen hinsichtlich der Leistungsfähigkeit des gesamten Leitungsnetzes oder zumindest für mehrere Teile des Leitungsnetzes getroffen werden können, werden die Referenzwerte, die ermittelten Werte und/oder die Vergleichswerte verschiedener Teile des Leitungsnetzes miteinander verglichen - Leitungsvergleichswerte.

Gemäß einer Ausführungsform der Erfindung wird das Verfahren für verschiedene Abschnitte einer Verbindung über den entsprechenden Teil des Leitungsnetzes durchgeführt. Hierdurch ist es auf einfache Weise möglich, auch abschnittsbezogene Qualitätsbewertungen vorzunehmen.

Um schnell zu Aussagen über die Qualität einer Verbindung zu kommen, werden die ermittelten Werte, und/oder die Vergleichswerte Qualitätskennzahlen/Qualitätsbewertungen zugeordnet, wie beispielsweise dem Transmission Rating Factor R. Zudem kann in einem nachfolgenden Auswerteprogramm die Verbindung hinsichtlich ihrer Zeit und Qualität dem Kunden oder dem Verantwortlichen für die Qualität des Leitungsnetzwerkes aussagekräftig veranschaulicht werden. Vorzugsweise hierfür sind die Referenzwerte, die ermittelten Werte, die Vergleichswerte und/oder die Qualitätskennzahlen/Qualitätsbewertungen über eine Ausgabeeinrichtung darstellbar.

Gemäß einer Ausführungsform der Erfindung besteht das Leitungsnetz aus Zugangsleitungsnetzen und einem Verbindungsleitungsnetz, wobei jeder Anschluss über ein Zugangsleitungsnetz mit dem Verbindungsleitungsnetz verbunden ist. Das Verfahren zur Messung der Qualität eines zur Übertragung von digitalen und analogen Signalen ausgelegten Leitungsnetzes ist somit sowohl für die Zugangsleitungsnetze als auch als Verbindungsleitungsnetz möglich.

Um vor allem alle Gespräche eines Kunden vollständig überwachen zu können, wird zumindest das Zugangsleitungsnetz mit dem INMD-Messverfahren überwacht.

Weitere Vorteile, Merkmale und Anwendungsmöglichkeiten des vorliegenden Verfahrens zur Messung der Qualität eines zur Übertragung von digitalen und analogen Signalen ausgelegten Leitungsnetzes sowie einer entsprechenden Vorrichtung zur Durchführung des Verfahrens ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeutet:
- Fig. 1: eine schematische Darstellung eines Leitungsnetzes mit Anschlüssen für Telekommunikationsendgeräte und Vorrichtungen zur Durchführung des Messverfahrens nach der Erfindung;
- Fig. 2: eine schematische Darstellung des Leitungsnetzes mit zwei Verbindungsmöglichkeiten von Kunde A zu Kunde B und den Vorrichtungen zur Durchführung des Messverfahrens nach der Erfindung, und
- Fig. 3: ein Diagramm, das die Qualitätsniveaus der beiden Verbindungsmöglichkeiten über den zeitlichen Verlauf zeigt.

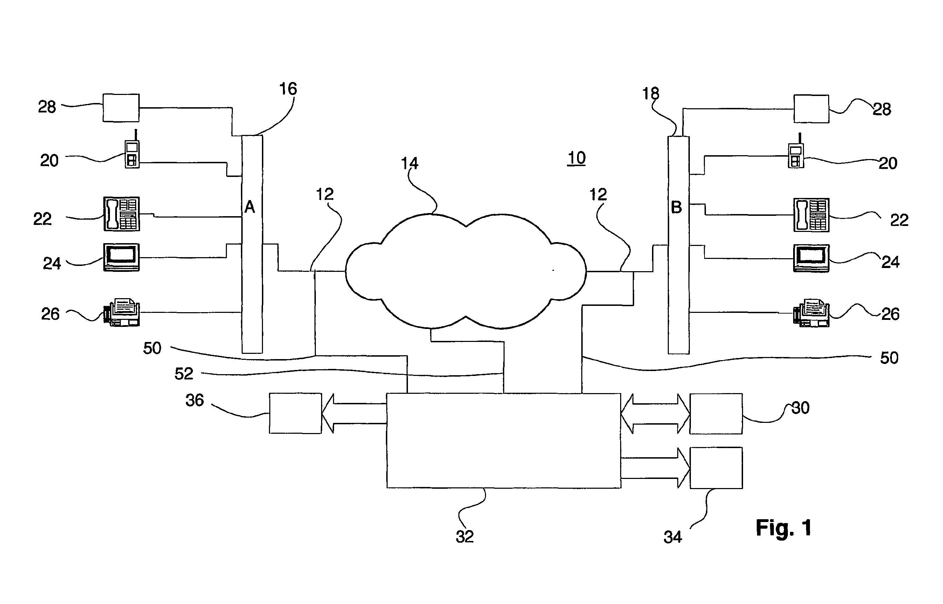

In Fig. 1 ist schematisch ein Leitungsnetz 10 dargestellt, das aus Zugangsleitungsnetzen 12 und einem Verbindungsleitungsnetz 14 besteht.

Die Zugangsleitungsnetze 12 verbinden das Verbindungsleitungsnetz 14 mit Anschlüssen 16 und 18 der Kunden. Der Anschluss 16 ist dabei dem Kunden A und der Anschluss 18 dem Kunden B zugeordnet.

An den Anschluss 16 und 18 ist jeweils ein Mobiltelefon 20, ein Telefon 22, ein PC 24, ein Telefax 26 sowie eine remote-test-unit 28 angeschlossen. Die remote-test-unit des Kunden A dient zunächst als Sender, die remote-test-unit 28 des Kunden B als Empfänger und somit als Messgerät.

Zur Bestimmung der Qualität des Leitungsnetzes 10 werden in einem "out of service, intrusive network"-Messverfahren verschiedene Parameter gemessen, beispielsweise der Sprachpegel, der Geräuschpegel, die Echolaufzeit, die Echodämpfung und ähnliches. Hierbei ist der Teil des Leitungsnetzes 10 von Anschluss 16 bis Anschluss 18 für die anderen Telekommunikationsendgeräte 20 bis 26 blockiert.

Die remote-test-units 28 können auch an unterschiedlichen Abschnitten der Verbindung Kunde A zu Kunde B angeschlossen sein, um eine abschnittsbezogene Qualitätsbetrachtung vorzunehmen. Im folgenden wird jedoch von der in Fig. 1 dargestellten Anordnung ausgegangen.

Um zu gewährleisten, dass hierbei auch brauchbare Ergebnisse herauskommen, wird die Verbindung Kunde A zu Kunde B über einen einzigen Netzkanal geführt. Ansonsten müsste das folgende beschriebene Verfahren für alle Netzkanäle durchgeführt werden, die bei der Verbindung geschaltet werden können, wobei die Werte dann den Netzkanälen jeweils zugeordnet werden.

Die mit dem "out of service, intrusive network"-Messverfahren ermittelten Werte der genannten Parameter werden als Referenzwerte in einem Speicher 30, einer Messvorrichtung 32 unter Zuordnung der Verbindung, also Kunde A zu Kunde B, sowie des Teils des Leitungsnetzes 10, also Anschluss 16, Zuleitungsnetz 12, entsprechender Netzkanal des Verbindungsleitungsnetzes 14 sowie Zuleitungsnetz 12 und Anschluss 18 abgelegt.

Nunmehr werden die remote-test-units 28 deaktiviert. Die Telekommunikationsendgeräte 20 bis 26 können nunmehr wieder eine Verbindung eingehen.

Die Verbindung wird durch die Messvorrichtung 32 mittels eines INMD-Messverfahrens überwacht. Die Messvorrichtung 32 greift dabei über eine Anschaltung 52 in das Leitungsnetz 10 an dem hier vorgesehenen Netzkanal zwischen Kunde A und Kunde B an. Da alle Verbindungen zwischen dem Kunden A und dem Kunden B über diesen Netzkanal gehen, können die Verbindungen hinsichtlich der Qualität der Übertragung mit dem INMD-Messverfahren überwacht werden. Hierbei werden die entsprechenden Parameter fortlaufend gemessen und mit den im Speicher 30 abgelegten Referenzwerten verglichen. Die sich hieraus ergebenden Übereinstimmungen und Unterschiede - Vergleichswerte - werden Qualitätskennzahlen zugeordnet, wie dies weiter unten noch erläutert wird. Diese Qualitätskennzahlen können über eine Ausgabeeinrichtung 34 dargestellt werden, sodass die verantwortliche Person sofort über die Qualitätssituation der Verbindungsleitung von Kunde A zu Kunde B informiert ist.

Die ermittelten Werte sowie die Vergleichswerte als auch die Qualitätskennzahlen werden der Messzeit zugeordnet und ebenfalls für spätere zeitbezogene Auswertung im Speicher 30 abgelegt.

Im Speicher 30 sind des Weiteren Schwellwerte für die einzelnen Parameter des INMD-Messverfahrens gespeichert. Diese Schwellwerte werden mit den zugeordneten ermittelten Werten während der INMD-Messung laufend verglichen. Bei Überschreiten des Schwellwertes ergeht ein Signal, das eine optische und akustische Anzeigeeinrichtung 36 betätigt. Die für die Qualität der Verbindung Kunde A zu Kunde B verantwortliche Person erhält hiermit umgehend eine Nachricht, wenn es zur nachhaltigen Beeinträchtigung der Qualität der Verbindung kommt. Entsprechend den Qualitätsanforderungen, die mit den Kunden vereinbart wurden, werden die Schwellwerte festgesetzt.

Nach Überschreiten zumindest eines Schwellwertes eines Parameters durch zumindest einen einzigen ermittelten zugeordneten Wert, wird das "out of service, intrusive network"-Messverfahren eingeleitet, um die Ursachen für die Überschreitung des Schwellwertes festzustellen und vor allem zu lokalisieren. Hierbei werden dann Messungen zur Lokalisierung der Störungsquelle, wie beispielsweise eine PSQM-Messung nach dem ITU-Standard, durchgeführt.

Alternativ zu dem oben genannten Verfahren können die Referenzwerte auch berechnet werden. Durch den Einsatz eines Netzwerkplanungsmodells, wie dem E-Modell nach dem ITU-Standard G.107, soll die zur Zeit ausschließlich quantitativ ausgerichtete Übertragungsplanung von Übertragungswegen durch die Möglichkeit einer Qualitätsvorhersage ergänzt werden. Diese rechnergestützte Modellrechnung kann z. B. dafür eingesetzt werden, um dem Netzwerkplaner Informationen zu liefern, mit welcher Ende zu Ende Übertragungsqualität der Kunde bei Einsatz entsprechender Übertragungsprodukte rechnen kann. Die Ergebnisse können z. B. Verwendung finden bei der Vertragsgestaltung, beim Bereitstellungsprozess und als Referenz für den Vertriebsablauf, z. B. Inbetriebnahme, Messung, Wartung usw.

Mit den nunmehr möglichen Qualitätsmessungen muss der Übertragungsweg, also der erforderliche Nutzkanal für den Kunden, so festgelegt werden, dass die Übertragungswege nicht wahllos zusammengeschaltet und andere Übertragungsgeräte kurzfristig eingeplant und geschaltet werden. Vielmehr erhält der Kunde vorgegebene Nutzkanäle im Leitungsnetz 10, die entsprechend dem oben beschriebenen Verfahren überwacht werden. Hierdurch können nachvollziehbare Qualitätsaussagen getroffen werden.

Um alle Gespräche des Kunden A oder Kunden B überwachen zu können, ist die Messeinrichtung 32 mit dem Zugangsleitungsnetz 12 über eine Anschaltung 50 verbunden. Über den Signalisierungskanal erhält die Messeinrichtung 32 alle notwendigen Informationen, um die Gespräche zuordnen zu können.

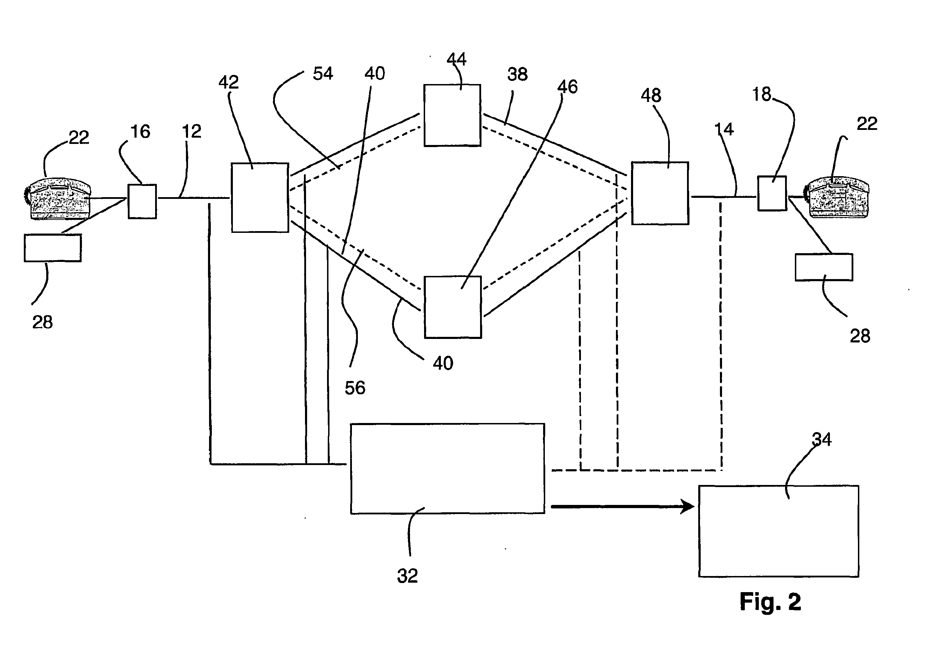

Dementsprechend ist in Fig. 2 ein Leitungsnetz 10 dargestellt, das zwei Nutzkanäle 38 und 40 mit vier Knoten 42 bis 48 zeigt.

Die Messvorrichtung 32 ist dabei mit beiden Nutzkanälen 38 und 40 sowie dem Zuleitungsnetz 12 zum Kunden A hin verbunden. Alle Verbindungen vom Kunden A zum Kunden B können über den Nutzkanal 38 oder den Nutzkanal 40 laufen, wobei die Informationen über die Verbindung dem Signalisierungskanal 54 bzw. 56 von der Messeinrichtung 32 entnommen wird. Somit wird die ganze Telekommunikation zwischen Kunde A und Kunde B im Hinblick auf die Qualität der Übertragung in der oben beschriebenen Weise überwacht.

Die dabei ermittelten Werte werden mit den Referenzwerten verglichen. Die Übereinstimmungen und Unterschiede ergeben Vergleichswerte, die Qualitätskennzahlen zugeordnet werden. Beispielsweise wenn der Transmission Rating Factor kleiner als 23 % ist, ist die Übertragung unbrauchbar. Bei einem Transmission Rating Factor von 24 % bis 43 % ist die Übertragung schlecht, bei einem Transmission Rating Factor von 44 % bis 63 % ist die Übertragung mittel, bei einem Transmission Rating Factor von 64 % bis 94 % ist die Übertragung gut und bei einem Transmission Rating Factor von 95 % oder mehr ist die Übertragung sehr gut.

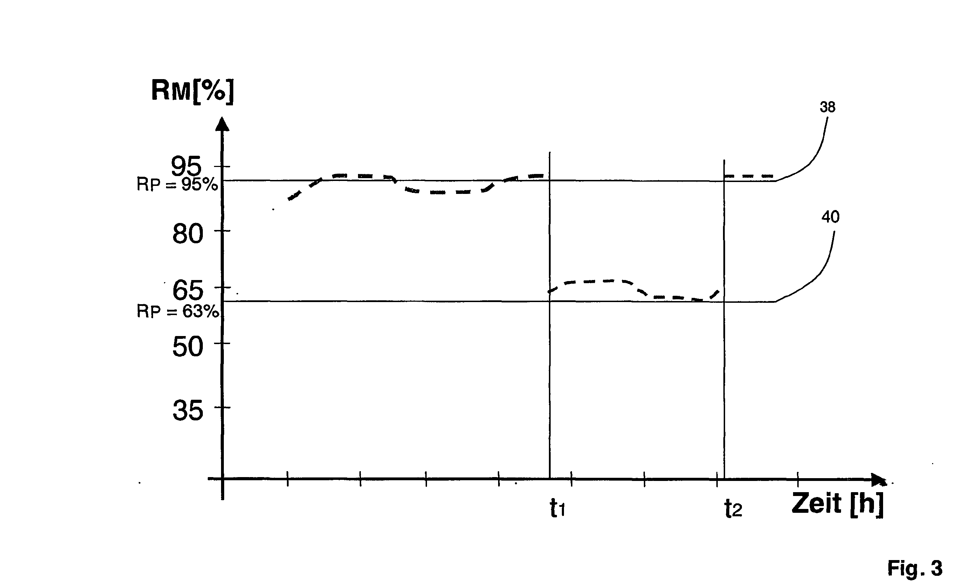

Fig. 3 zeigt den Transmission Rating Factor der beiden Nutzkanäle 38 und 40 über die Zeit verteilt. Hieraus geht hervor, dass ab einem bestimmten Zeitpunkt t₁ nur der zweite Nutzkanal 40 für die Verbindung Kunde A zu Kunde B benutzt wird und nicht der erste Nutzkanal 38. Außerhalb der Zeit t₂-t₁ wird nur der erste Nutzkanal 38 genutzt. Der erste Nutzkanal 38 hat eine sehr gute Übertragungsqualität, wohingegen der zweite Nutzkanal 40 eine mittlere Qualität aufweist. Die Prozentzahlen beziehen sich auf den Referenzwert.

Derartige Qualitätsbetrachtungen sind für die Preisgestaltung äußerst wichtig.

Beispielsweise könnte nach dem in Fig. 3 dargestellten Fall der Kunde bis auf den Zeitraum t₂-t₁ eine gute Übertragungsqualität vereinbart haben. In der Zeit von t₁ bis t₂ wäre die Verbindungsintensität jedoch nur sehr gering, sodass er mit einer mittleren Qualität zufrieden ist. Insofern lässt er sich für den ersten Zeitraum eine hohe Qualität und für den zweiten Zeitraum eine mittlere Qualität vom Netzbetreiber garantieren. Ein dem Anforderungsprofil des Kunden entsprechendes Preisangebot ist dadurch einfach zu erstellen.

### BEZUGSZEICHENLISTE

- 10: Leitungsnetz
- 12: Zugangsleitungsnetz
- 14: Verbindungsleitungsnetz
- 16: Anschluss Kunde A
- 18: Anschluss Kunde B
- 20: Mobiltelefon
- 22: Telefon
- 24: PC
- 26: Telefax
- 28: remote-test-unit
- 30: Speicher
- 32: Messvorrichtung
- 34: Ausgabeeinheit
- 36: Anzeigeeinrichtung
- 38: Nutzkanal - oben
- 40: Nutzkanal - unten
- 42: Knoten - links
- 44: Knoten - oben
- 46: Knoten - unten
- 48: Knoten - rechts
- 50: Anschaltung an das Zuleitungsnetz
- 52: Anschaltung an das Verbindungsleitungsnetz
- 54: Signalisierungskanal
- 56: Signalisierungskanal

## Patentansprüche

1. Verfahren zur Messung der Qualität eines zur Übertragung von digitalen oder analogen Signalen ausgelegten Leitungsnetzes (10) einschließlich der mit dem Leitungsnetz (10) verbundenen Anschlüsse (16, 18), über die Telekommunikationsendgeräte, wie Telefone (22), Telefaxgeräte (26), Modems (24), Mobiltelefone (20) oder ähnliches, mit dem Leitungsnetz (10) verbunden sind, mit Hilfe eines INMD-Messverfahrens, **dadurch gekennzeichnet, dass** zunächst Referenzwerte der Parameter des INMD-Messverfahrens für eine Verbindung über zumindest einen Teil (38, 40, 54, 56) des Leitungsnetzes (10) ermittelt werden, diese Referenzwerte diesem Teil (38, 40) des Leitungsnetzes (10) zugeordnet in einem Speicher (30) abgelegt werden, dieser Teil (38, 40) des Leitungsnetzes (10) danach mit Hilfe des INMD-Mess-Verfahrens überwacht wird, wobei die hierbei ermittelten Werte der jeweiligen Parameter mit den abgespeicherten zugeordneten Referenzwerten verglichen werden, sodass Übereinstimmungen mit und Abweichungen von den Referenzwerten erkennbar sowie im Hinblick auf die Qualität der Übertragung bewertbar sind.

2. Verfahren nach Anspruch 1, **dadurch gekennzeichnet, dass** die Referenzwerte über ein "out of service, intrusive network"-Messverfahren ermittelt werden.

3. Verfahren nach Anspruch 1, **dadurch gekennzeichnet, dass** die Referenzwerte berechnet werden, insbesondere über ein Netzwerkplanungsmodell, wie dem E-Modell nach dem ITU-Standard.

4. Verfahren nach einem der vorangehenden Ansprüche, **dadurch gekennzeichnet, dass** die mit dem INMD-Messverfahren ermittelten Werte und/oder die zugeordneten Vergleichswerte mit Zuordnung auf diesen Teil des Leitungsnetzes (10) zugeordnet im Speicher (30) abgelegt werden.

5. Verfahren nach Anspruch 4, **dadurch gekennzeichnet, dass** die Referenzwerte, die ermittelten Werte und/oder die Vergleichswerte einer Messzeit zugeordnet werden.

6. Verfahren nach einem der vorangehenden Ansprüche, **dadurch gekennzeichnet, dass** Schwellwerte für die einzelnen Parameter des INMD-Messverfahrens festgelegt werden, diese Schwellwerte mit den zugeordneten ermittelten Werten, insbesondere während der INMD-Messung, laufend verglichen werden und bei Überschreiten ein Signal ergeht.

7. Verfahren nach Anspruch 6, **dadurch gekennzeichnet, dass** das Signal eine optische und/oder akustische Anzeige (36) betätigt.

8. Verfahren nach Anspruch 6 oder 7, **dadurch gekennzeichnet, dass** nach Überschreiten zumindest eines Schwellwerts eines Parameters durch zumindest einen einzigen ermittelten zugeordneten Wert das "out of service, intrusive network"-Messverfahren eingeleitet wird, um die Ursachen für die Überschreitung des Schwellwerts festzustellen und zu lokalisieren.

9. Verfahren nach Anspruch 8, **dadurch gekennzeichnet, dass** bei dem "out of service, intrusive network"-Messverfahren Messungen zur Lokalisierung von Störungsquellen, wie PSQM nach dem ITU-Standard, durchgeführt werden.

10. Verfahren nach einem der vorangehenden Ansprüche, **dadurch gekennzeichnet, dass** die Referenzwerte, die ermittelten Werte und/oder die Vergleichswerte verschiedener Teile des Leitungsnetzes (10) miteinander verglichen werden - Leitungsvergleichswerte.

11. Verfahren nach einem der vorangehenden Ansprüche, **dadurch gekennzeichnet, dass** es für verschiedene Abschnitte (42 bis 48) einer Verbindung über den entsprechenden Teil (38, 40) des Leitungsnetzes (10) durchgeführt wird.

12. Verfahren nach einem der vorangehenden Ansprüche, **dadurch gekennzeichnet, dass** die ermittelten Werte, die Vergleichswerte und/oder die Leitungsvergleichswerte Qualitätskennzahlen/Qualitätsbewertungen zugeordnet werden.

13. Verfahren nach Anspruch 9, **dadurch gekennzeichnet, dass** die Referenzwerte, die ermittelten Werte, die Vergleichswerte, die Leitungsvergleichswerte und/oder die Qualitätskennzahlen/Qualitätsbewertungen über eine Ausgabeeinrichtung (34) dargestellt werden.

14. Verfahren nach einem der vorangehenden Ansprüche, **dadurch gekennzeichnet, dass** das Leitungsnetz (10) aus Zugangsleitungsnetzen (12) und einem Verbindungsleitungsnetz (14) besteht, wobei jeder Anschluss (16, 18) über ein Zugangsleitungsnetz (12) mit dem Verbindungsleitungsnetz (14) verbunden ist.

15. Verfahren nach Anspruch 14, **dadurch gekennzeichnet, dass** zumindest das Zugangsleitungsnetz (12) mit dem INMD-Messverfahren überwacht wird.

16. Vorrichtung mit Mitteln zur Durchführung der Schritte des Verfahrens nach einem der Ansprüche 1 bis 15.

## Claims

1. Method for measuring the quality of a line network (10) designed to transmit digital or analog signals, including the line units (16, 18) which are connected to the line network (10) and are used to connect telecommunications terminals such as telephones (22), fax machines (26), modems (24), mobile telephones (20) or the like to the line network (10), with the aid of an INMD measurement method, **characterized in that** reference values of the parameters of the INMD measurement method are first determined for a connection over at least one part (38, 40, 54, 56) of the line network (10), these reference values are stored in a memory (30) in such a manner that they are associated with this part (38, 40) of the line network (10), said part (38, 40) of the line network (10) is subsequently monitored with the aid of the INMD measurement method, during which the values of the respective parameters measured in this process are compared with the stored associated reference values, so that correspondences with and deviations from the reference values can be detected and can be evaluated with regard to the quality of the transmission.

2. Method according to claim 1, **characterized in that** the reference values are measured using an "out of service, intrusive network" measurement method.

3. Method according to claim 1, **characterized in that** the reference values are calculated, in particular, via a network planning model such as the E-model according to the ITU standard.

4. Method according to any one of the preceding claims, **characterized in that** the values measured with the INMD measurement method and/or the associated comparison values are stored with an association to this part of the line network (10) associated therewith in the memory (30).

5. Method according to claim 4, **characterized in that** the reference values, the measured values, and/or the comparison values are associated with a measurement time.

6. Method according to any one of the preceding claims, **characterized in that** threshold values are established for the individual parameters of the INMD measurement method, said threshold values are continuously compared with the associated measured values, in particular during the INMD measurement, and a signal is issued when a threshold value is exceeded.

7. Method according to claim 6, **characterized in that** the signal operates a visual and/or audible indicator (36).

8. Method according to any one of claims 6 or 7, **characterized in that** when at least one threshold value of a parameter is exceeded by at least one single measured associated value, the "out of service intrusive network" measurement method is initiated to detect and to locate the causes for the exceeding of the threshold value.

9. Method according to claim 8, **characterized in that** measurements, such as PSQM according to the ITU standard, are carried out to locate sources of disturbance during the "out of service, intrusive network" measurement procedure.

10. Method according to any one of the preceding claims, **characterized in that** the reference values, the measured values and/or the comparison values of different parts of the line network (10) are compared with each other ― line comparison values.

11. Method according to any one of the preceding claims, **characterized in that** the method is carried out for different sections (42 through 48) of a connection over the corresponding part (38, 40) of the line network (10).

12. Method according to any one of the preceding claims, **characterized in that** the measured values, the comparison value and/or the line comparison values are associated with quality index values/quality ratings.

13. Method according to claim 9, **characterized in that** the reference values, the measured values, the comparison values, the line comparison values and/or the quality index values/quality ratings are displayed via an output device (34).

14. Method according to any one of the preceding claims, **characterized in that** the line network (10) is composed of access line networks (12) and a trunk line network (14), each line unit (16, 18) being connected to the trunk line network (14) via an access line network (12).

15. Method according to claim 14, **characterized in that** at least the access line network (12) is monitored using the INMD measurement method.

16. Device with means for carrying out the steps of the method according to any one of claims 1 through 15.

## Revendications

1. Procédé de mesure de la qualité d'un réseau de lignes (10) conçu pour transmettre des signaux numériques ou analogiques, y compris des connexions (16, 18) reliées au réseau de lignes (10) par lesquelles des terminaux de télécommunication, tels que téléphones (22), appareils de télécopie (26), modems (24), téléphones mobiles (20) ou similaires, sont connectés au réseau de lignes (10), ceci à l'aide d'un procédé de mesure INMD, **caractérisé en ce que**, dans un premier temps, on détermine des valeurs de référence des paramètres du procédé de mesure INMD pour une liaison sur au moins une partie (38, 40, 54, 56) du réseau de lignes (10), ces valeurs de référence sont associées à ladite partie (38, 40) du réseau de lignes (10) et stockées dans une mémoire (30), cette partie (38, 40) du réseau de lignes (10) est ensuite surveillée à l'aide du procédé de mesure INMD, les valeurs des paramètres respectifs déterminées au cours de la mesure INMD étant comparées avec les valeurs de référence associées stockées en mémoire, de manière que les concordances et divergences par rapport aux valeurs de référence soient reconnaissables et évaluables en termes de qualité de la transmission.

2. Procédé selon la revendication 1, **caractérisé en ce que** les valeurs de référence sont déterminées moyennant un procédé de mesure "out of service, intrusive network".

3. Procédé selon la revendication 1, **caractérisé en ce que** les valeurs de référence sont calculées, notamment moyennant un modèle de planification de réseau, tel que le modèle E selon la norme UIT.

4. Procédé selon l'une des revendications précédentes, **caractérisé en ce que** les valeurs déterminées à l'aide du procédé de mesure INMD et/ou les valeurs de comparaison y relatives sont stockées de manière attribuée dans la mémoire (30) avec attribution à cette partie du réseau de lignes (10).

5. Procédé selon la revendication 4, **caractérisé en ce que** les valeurs de référence, les valeurs déterminées et/ou les valeurs de comparaison sont attribuées à un temps de mesure.

6. Procédé selon l'une des revendications précédentes, **caractérisé en ce qu'**on détermine des valeurs de seuil pour les différents paramètres du procédé de mesure INMD, ces valeurs de seuil étant comparées en continu, en particulier pendant la mesure INMD, avec les valeurs déterminées associées et un signal étant généré en cas de dépassement.

7. Procédé selon la revendication 6, **caractérisé en ce que** le signal actionne un indicateur visuel et/ou sonore (36).

8. Procédé selon la revendication 6 ou 7, **caractérisé en ce que** le procédé de mesure "out of service, intrusive network" est déclenché en cas de dépassement d'au moins une valeur de seuil d'un paramètre par au moins une seule valeur associée déterminée afin de rechercher et de localiser les causes du dépassement de la valeur de seuil.

9. Procédé selon la revendication 8, **caractérisé en ce que** des mesures, telles que le PSQM selon la norme UIT, destinées à localiser des sources d'interférence, sont effectuées au cours du procédé de mesure "out of service, intrusive network".

10. Procédé selon l'une des revendications précédentes, **caractérisé en ce que** les valeurs de référence, les valeurs déterminées et/ou les valeurs de comparaison de différentes parties du réseau de lignes (10) sont comparées les unes aux autres - valeurs de comparaison de lignes.

11. Procédé selon l'une des revendications précédentes, **caractérisé en ce qu'**il est réalisé pour différentes sections (42 à 48) d'une liaison sur la partie correspondante (38, 40) du réseau de lignes (10).

12. Procédé selon l'une des revendications précédentes, **caractérisé en ce que** les valeurs déterminées, les valeurs de comparaison et/ou les valeurs de comparaison de lignes sont attribuées à des indices de qualité/évaluations de qualité.

13. Procédé selon la revendication 9, **caractérisé en ce que** les valeurs de référence, les valeurs déterminées, les valeurs de comparaison, les valeurs de comparaison de lignes et/ou les indices de qualité/évaluations de qualité sont affichés par l'intermédiaire d'une unité de sortie (34).

14. Procédé selon l'une des revendications précédentes, **caractérisé en ce que** le réseau de lignes (10) est composé de réseaux d'abonnés (12) et d'un réseau de connexion (14), chaque raccordement (16, 18) étant reliée au réseau de connexion (14) par l'intermédiaire d'un réseau d'abonnés (12).

15. Procédé selon la revendication 14, **caractérisé en ce qu'**au moins le réseau d'abonnés (12) est surveillé à l'aide du procédé de mesure INMD.

16. Dispositif comportant des moyens pour la mise en oeuvre des étapes du procédé selon l'une des revendications 1 à 15.
